# EUROPEAN PATENT APPLICATION

(11) **EP 2 555 069 A1**
(43) Date of publication of application: **06.02.2013**
(21) Application number: 12176072.2
(22) Date of filing: 12.07.2012
(51) Int. Cl.: G05B 19/418, B25J 9/16, B23H 9/10

(54) **Control of a machining operation**

(30) Priority: 03.08.2011 GB 201113331
(71) Applicant: Rolls-Royce plc, London SW1E 6AT (GB)
(72) Inventor: Cameron, Mitchel, Johnstone, Renfrewshire PA6 7LH (GB)
(74) Representative: Gee, Philip David

(57) **Abstract**

A method for controlling the machining of a component is provided. The method incorporates closed-loop control based on feedback of measured parameters. The method includes the steps of: (i) measuring predetermined dimensions of a component; (ii) comparing the measured dimensions against design data defining a required shape for the component; (iii) using the results of the comparison to define material removal that is needed to bring the component to the required shape; (iv) delivering the component to a site at or adjacent to a machining station having a material removal tool (24), the component being gripped by a robotic manipulator (22) at said site; (v) using the defined material removal and the known position of the robotic manipulator at the machining station to determine movements of the material removal tool that will produce the required shape for the component; and (vi) performing a machining operation on the component at the machining station using the determined movements while maintaining the grip on the component by the robotic manipulator. The method further includes: the step, between steps (iv) and (v), of measuring the position of the gripped component and/or the robotic manipulator at said site to determine errors in the position of the robotic manipulator; and using the determined errors in the previous step to improve the accuracy of the known position of the robotic manipulator at the machining station.

## Description

### Field of the Invention

The present invention relates to the machining of components, and more particularly to methods for controlling the machines used to perform such operations. In an example of the invention, it is applied to the profile forming of a rotor blade aerofoil for a gas turbine engine.

### Background of the Invention

In a gas turbine engine, each of the rotor blades and stator vanes is of aerofoil cross-section shape and must conform with its intended design, within certain specification limits. For example, each aerofoil has a leading edge designed with a complex geometry to deliver a specific effect. Deviations from the optimum design may result in undesirable reductions in performance, such as aerodynamic stall, compressor surge or reduction in engine efficiency. In some circumstances, relatively small deviations may have significant effects on performance. A similar but different complex geometry governs the definition of the trailing edge of an aerofoil.

Aerofoil and edge forming can be carried out using "form following" automated polishing techniques or by hand finishing. These techniques simply follow the existing component shape, essentially removing a constant amount of material all over the surface, and thereby either reduce the part thickness, or form a radius or edge. The measurement of the surfaces and dimensions produced by these methods is carried out as a supplementary operation, following the process. Any components that require correction or alteration to fall within the specification limits are then re-processed in an attempt to correct or modify sizes. These existing processes are not capable of determining the quality, variation or conformance of incoming parts, and so these parameters cannot be taken into account in defining the operation to be performed. The unknown condition of incoming components has a large effect on the outgoing conformance and on the profiles produced.

When machine tools are used to form components by removing material, typically there is also progressive wear to the tool face, which will change the profile of the tool face as it is presented to the component. The consequence of this is unpredictability in the amount of material removed by the tool, and in the surface profile and finish it will produce on the component. This increases the variability of the components produced by the process, and increases the number of components that will not fall within the specification limits when measured.

The combination of these uncertainties leads (in spite of the specification limits) to variability and unpredictability in the geometry of the components produced by known methods, with a consequent reduction in their aerodynamic performance.

In order to address these problems, WO 2008/012490 proposes a method for performing a machining operation on a part, the method incorporating closed-loop control based on feedback of measured parameters. Advantageously, the method can deliver more consistent components whose geometry is closer to the design intent.

However, there is still a need for improved accuracy in machining.

### Summary of the Invention

Accordingly, in a first aspect, the present invention provides a method for controlling the machining of a component, the method incorporating closed-loop control based on feedback of measured parameters, wherein the method includes the steps of:
(i) measuring predetermined dimensions of a component;
(ii) comparing the measured dimensions against design data defining a required shape for the component;
(iii) using the results of the comparison to define material removal that is needed to bring the component to the required shape;
(iv) delivering the component to a site at or adjacent to a machining station having a material removal tool, the component being gripped by a robotic manipulator at said site;
(v) using the defined material removal and the known position of the robotic manipulator at the machining station to determine movements of the material removal tool that will produce the required shape for the component; and
(vi) performing a machining operation on the component at the machining station using the determined movements while maintaining the grip on the component by the robotic manipulator;
   wherein the method further includes:
   the step, between steps (iv) and (v), of measuring the position of the gripped component and/or the robotic manipulator at said site to determine errors in the position of the robotic manipulator; and
   using the determined errors in step (v) to improve the accuracy of the known position of the robotic manipulator at the machining station.

In machining processes which use robotic handling to determine the component position, the accuracy of the determination can be compromised by inaccuracy in the robot's position (caused, for example, by backlash). The error may typically be of the order of 0.1 mm. However, by measuring the position of the gripped component and/or the robotic manipulator at a site at or adjacent to the machining station but before the machining operation is performed, the component's "real world" position can be determined. Any offset of the component from its expected position can then be used to improve the accuracy of the movements determined in step (v). In practice, errors can be reduced to about 0.02 mm.

In step (v), movements of the robotic manipulator, as well as the material removal tool, that will produce the required shape for the component may be determined. The method can then further include: measuring the position of the gripped component and/or the robotic manipulator at a site at or adjacent to the machining station one or more times during the machining operation of step (vi) to determine errors in the position of the robotic manipulator, and adjusting the determined movements of the material removal tool and/or the robotic manipulator to compensate for the errors in the remaining parts of the machining operation.

Indeed, in a second aspect, the present invention provides a method for controlling the machining of a component, the method incorporating closed-loop control based on feedback of measured parameters, wherein the method includes the steps of:
(i) measuring predetermined dimensions of a component;
(ii) comparing the measured dimensions against design data defining a required shape for the component;
(iii) using the results of the comparison to define material removal that is needed to bring the component to the required shape;
(iv) delivering the component to a machining station having a material removal tool, the component being gripped by a robotic manipulator at the machining station;
(v) using the defined material removal and the known position of the robotic manipulator at the machining station to determine movements of the material removal tool and the robotic manipulator that will produce the required shape for the component; and
(vi) performing a machining operation on the component at the machining station using the determined movements while maintaining the grip on the component by the robotic manipulator;
   wherein the method further includes:
   measuring the position of the gripped component and/or the robotic manipulator at a site at or adjacent to the machining station one or more times during the machining operation of step (vi) to determine errors in the position of the robotic manipulator; and
   adjusting the determined movements of the material removal tool and/or the robotic manipulator to compensate for the determined errors in the remaining parts of the machining operation.

Advantageously, by determining errors in the position of the robotic manipulator and adjusting the determined movements, inaccuracies in the robot's position (caused, for example, by backlash) can be compensated for.

Optional features of the invention will now be set out. These are applicable singly or in any combination with any aspect of the invention.

Typically, the method is performed in a machining cell.

The method may include an initial step of taking the component from a component holder. The method may include a final step of returning the component to the component holder.

Steps (iv) to (vi) may be repeated for one or more further machining stations and/or using one or more further robotic manipulators.

The method may include a final step of re-measuring the predetermined dimensions of the component to verify that the predetermined dimensions conform by repeating the same or a similar method.

Typically the component is delivered in step (iv) by the robotic manipulator. For example, the robotic manipulator can take the component from a component holder and deliver it to the machining station or to a site adjacent to the machining station. Or the robotic manipulator can take the component from a machining station and deliver it to a next machining station or to a site adjacent to the next machining station.

The position of the gripped component at the site at or adjacent to the machining station can be measured by probing the surface of the component and/or the robotic manipulator at spaced locations. For example, sufficient spaced locations may be probed to determine errors from all the active movement axes of the robotic manipulator. Typically, six or more spaced locations are probed. The measurements can be made by a contacting or non-contacting probe (e.g. a touch trigger type probe, or a break beam type sensor).

Preferably, the position of the gripped component and/or the robotic manipulator is measured at a site adjacent to the machining station. Such a site can, for example, be a dedicated measuring station. Although the gripped component then has to be moved from the site to the machining station, a close proximity of the site and the machining station can avoid any significant further inaccuracies being introduced into the robotic manipulator's position by this movement. When the measuring station includes a contacting or non-contacting probe, the gripped component can be moved around the probe to probe the surface of the gripped component and/or the robotic manipulator. These movements can be sufficiently small that again it is possible to avoid introducing significant further inaccuracies into the robotic manipulator's position.

Further optional features of the invention are set out below.

### Brief Description of the Drawings

Embodiments of the invention will now be described by way of example with reference to the accompanying drawings in which:
Figure 1 is a schematic illustration of a machining cell; and
Figure 2 is a view of a grinding tool.

### Detailed Description and Further Optional Features of the Invention

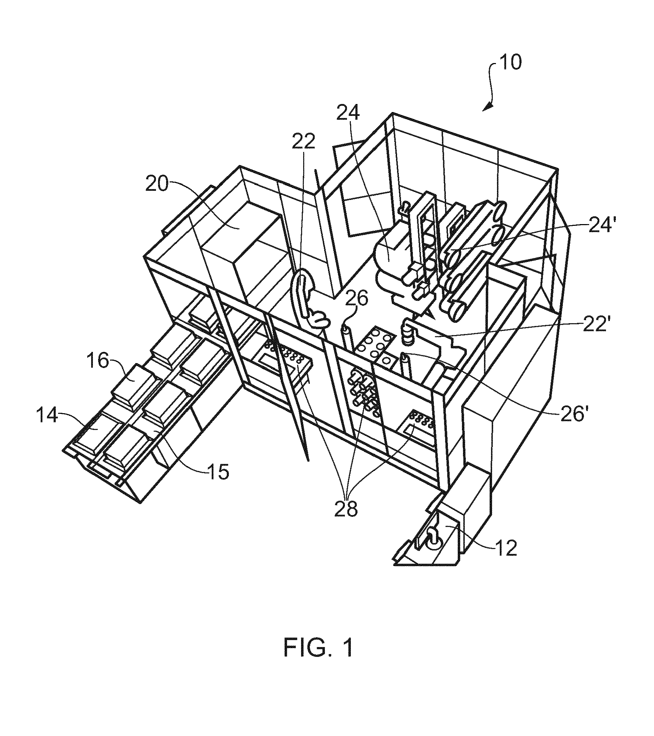

In Figure 1, a machining cell is shown generally at 10. The cell 10 includes a number of machines and devices, whose purpose and operation will be explained below. These machines and devices are linked to a computer 12 which can store and process information received from the machines and devices, or their controllers, and issue instructions to them.

This cell is equipped to perform machining operations, such as grinding and polishing, on a rotor blade of a gas turbine engine. The cell can be used to perform single- or multiple-stage manufacturing operations.

Incoming blades are brought into the cell on an input conveyor 14. Part holders 16 are queued on the conveyor, the holders containing, for example, blades on which a machining operation is to be performed.

An inspection device 20, containing e.g. an optical reader, can detect the positions of the blades within the part holder 16 at the front of the queue, and can also read a component identifier, such as a barcode (not shown) on each blade. For example, the optical reader can include a 2D/3D camera system that locates the number of parts in the holder and the orientation of the parts in the holder. The camera system can also recognise the "shape" of the parts, ensuring the correct parts are loaded in the holder, and that all previous operations have been completed, i.e. the parts have no missing features.

Directed by a part or part holder detector, which may be the optical reader, a robot manipulator 22 takes one blade at a time from the part holder 16. An example of such a manipulator is the Fanuc M16ib. An arm of the manipulator 22 is equipped at one end with a gripper of suitable dimensions to hold the blades. A change area 28 permits the storage of other grippers, suitable for other parts of different design or size. Information in the component identifier of the blade can be used to direct the manipulator to mount the correct gripper. The parts may be new, in the process of first manufacture, or they may be service-worn parts which are to be refurbished for further service.

The relevant dimensions of the blade are then measured in the inspection device 20 by, for example, a coordinate measuring machine, a non-contact "confocal" optical sensor machine, a linear contact transducer etc., and the measurements compared with design data defining the required final shape of the blade following the machining operation.

This comparison may determine that the required shape cannot be made (because, for instance, there is insufficient material - which is more likely in the case of service-worn parts than in the case of new parts). In this case the blade will be rejected and the next blade selected from the part holder 16. Rejected blades are removed from the cell for assessment elsewhere.

Conversely, if the blade is determined to be within specification, then no work is required. The blade is replaced in the part holder 16 and the next blade is selected.

If the blade is accepted for machining, the comparison between the measured data and the design data is used to define the controlling parameters for the machining operation, defining the material removal that is needed to produce the required shape. The measured data and the comparison data are stored in computer storage (for example, a database), using the component identifier to link them to the blade. To control the profiles generated at the edge of the blade aerofoil, the control parameters include calculated form tolerances that ensure the created surfaces change uniformly between measured points. These calculated tolerances ensure the created edge or surface maintains the design intent ellipse ratio. This maintains the theoretical rate of change across the edge/surface, and delivers the ideal profile for every section height along the length of the aerofoil.

A set of machine tools 24 is provided in the cell 10. These can be selectively operated, and provide respective machining stations. The machining characteristics of each tool may be controllably variable. For example, the wheel of a grinder or a polisher may be changeable to provide different grinding/polishing characteristics.

The data may be used to select a machine or tool to perform the machining operation. The selection can be based on such parameters as the part to be machined, the amount of material to be removed and the surface finish required.

The machining operation may require only one operation, or may require a sequence of operations using one or more machines at one or more machining stations.

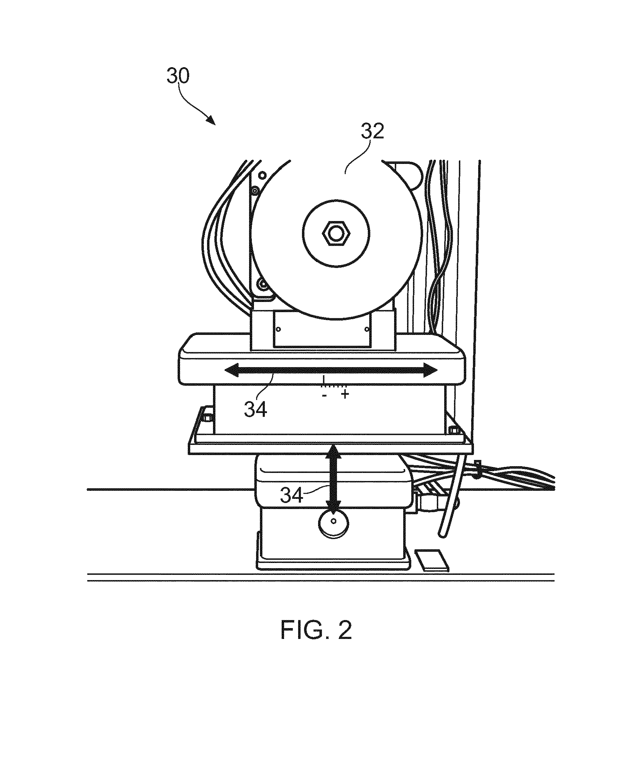

Figure 2 shows a view of grinder 30 having a grinding wheel 32 and slides 34 providing movement of the wheel 32 in X, Y and Z directions. A polisher may have a polishing wheel and similar movement slides. The slides 34 allow the wheel 32 to be moved freely around the blade while maintaining grinding/polishing contact. This contact can, therefore, be kept at a pressure defined in the controlling parameters for the machining operation and can accommodate variation in the blade surface from part to part, or within the same part. A machining operation using such a machine tool will now be described.

Before machining, however, the blade is delivered to a measuring station 26 which comprises a contact or non-contact measuring probe (such as a digital or analogue touch trigger type probe, or a break beam sensor). The blade is held in the gripper of the manipulator arm and, in order to compensate for any inaccuracy in the robot manipulator's position, caused e.g. by backlash effects, the position of the blade as held by the gripper is measured by moving the blade around the probe. For example, the blade can be probed at six or more spaced locations to accurately determine the position of the blade and thereby determine the respective error in each of the movement axes of the manipulator arm and gripper. These errors are then used to improve the accuracy of the position determination of the manipulator arm and gripper at the machining station. Thereafter, the measurements of the blade made previously, together with the improved parameters of the gripper and manipulator arm, are combined to determine the position of the blade relative to the grinding or polishing machine datums. In this way, when the machining operation is performed using the defined controlling parameters, the accuracy of the operation can be substantially improved.

Although the manipulator arm is used to move the blade around the probe, these relatively small movements do not introduce significant further errors in the movement axes. Likewise, because the measuring station 26 is adjacent to the machining stations of the machine tools 24, subsequent use of the manipulator arm to move the blade to the appropriate machining station also does not introduce significant further errors in the movement axes.

Additionally or alternatively to probing the blade at the spaced locations, the manipulator 22 itself can be probed to determine directly the errors in the movement axes of the manipulator arm and gripper.

Still held in the gripper of the manipulator arm 22, the blade is then delivered to the grinding or polishing machine by the manipulator. The blade is held in the gripper throughout the machining operation. As the grinding or polishing wheel rotates, the manipulator arm is moved to cause the blade to bear against the surface of the wheel. The wheel must rotate at a known speed and apply a known force to the blade, to grind or polish it in accordance with the calculated machining schedule (different materials require different speeds and pressures, and a finishing polish will typically be at a lower pressure). In use, the wheel is subject to progressive wear. To address this problem, the grinding or polishing machine includes measuring means by which the condition of the wheel can be determined in use, and its position adjusted so that it continues to exert a known force and surface speed on the blade. The progressive wear will also lead to a change in the profile of the wheel, and so at suitable points in the machining cycle the wheel will be re-profiled to restore the correct profile and finish. The measuring means can also determine the profile of the polishing wheel.

Further measurement and adjustment may take place part way through a machining operation. In particular, because movement of the manipulator arm may introduce additional inaccuracies or drift, e.g. caused again by backlash effects, the blade can be re-probed to accurately determine its position and determine any further errors in the movement axes of the manipulator arm. These further errors can then be used to improve the accuracy of the position determination of the manipulator arm by adjusting the movements of the material removal tool and/or the robotic manipulator to compensate for the further errors.

Measuring devices incorporated into the machines detect the temperature in the vicinity of the tool. Optionally, further measuring devices in the cell and within the machines detect the ambient pressure and temperature. Changes in these parameters may affect the machining operations, and so the data from the measurements are fed back into the definition of the machining operation to compensate for environmental conditions. Such compensation will normally take place in the initial definition of the machining operation, but if a large change in conditions is detected during a machining operation, the component may also be remeasured or adjustments may be made to the controlling parameters to ensure that the final part is within the acceptance criteria.

Typically after a final polishing is complete, the blade is measured again in the inspection device 20, and the measurements are compared with the design data for the finished blade to determine whether the polished blade is acceptable. Because the definition of the machining operation takes account of the initial condition of the blade, the likelihood is high that the blade will be acceptable. This inspection may incorporate comparison against a standard "artefact" to allow for environmental variations, such as temperature, to ensure that nominal dimensions at standard temperature and pressure are achieved.

In the unlikely event that too much material has been removed, the blade is rejected and removed from the cell.

Once the blade meets the acceptance criteria, it is returned by the manipulator 22 to the part holder 16. The next blade is then processed, and so on until all the blades from the part holder 16 have been either processed or rejected. The part holder 16 is then transferred to the adjacent output conveyor 15, and is moved out of the cell, e.g. to undergo a finishing operation, such as mass vibratory finishing. Alternatively, the accepted blade can be transferred to another robotic manipulator for further machining, For example, the cell 10 contains a second robot manipulator 22', a second set of machine tools 24', and a second measuring station 26'. The second robot manipulator 22' can carry out half of the required machining operations features, to reduce the cycle time. To effect the transfer, the gripper, still maintaining its grip on the blade, can be exchanged between the first 22 and second 22' robotic manipulators so that the transfer itself does not require any re-probing of the blade.

It will be appreciated that the embodiment described represents only a single example of the application of the claimed method, and that various modifications may be made without departing from the scope of the invention.

The method is not limited to aerofoil components or gas turbine components, but may be applied to substantially any manufactured component.

Within the cell described, the method may be applied to perform a grinding operation, a polishing operation, or to successive grinding and polishing operations. Additionally or alternatively, different machining operations may also be performed, depending on the machine tools available within the cell. Some examples of the machines that might be included are grinding, linishing or polishing tools; polishing mops; electrochemical finishing machines; apparatus for surface treatment; hydrostatic presses; apparatus for edge deburring.

The reading of part identity, as described, uses barcodes but may equally well use other techniques such as magnetic characters, magnetic strips, surface-mounted or embedded RFID etc. or a combination of any of these (for example, a visible 2D or 3D barcode combined with an embedded RFID).

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

All references referred to above are hereby incorporated by reference.

## Claims

1. A method for controlling the machining of a component, the method incorporating closed-loop control based on feedback of measured parameters, wherein the method includes the steps of:
(i) measuring predetermined dimensions of a component;
(ii) comparing the measured dimensions against design data defining a required shape for the component;
(iii) using the results of the comparison to define material removal that is needed to bring the component to the required shape;
(iv) delivering the component to a site at or adjacent to a machining station having a material removal tool (24), the component being gripped by a robotic manipulator (22) at said site;
(v) using the defined material removal and the known position of the robotic manipulator at the machining station to determine movements of the material removal tool that will produce the required shape for the component; and
(vi) performing a machining operation on the component at the machining station using the determined movements while maintaining the grip on the component by the robotic manipulator;
wherein the method further includes:
the step, between steps (iv) and (v), of measuring the position of the gripped component and/or the robotic manipulator at said site to determine errors in the position of the robotic manipulator; and
using the determined errors in step (v) to improve the accuracy of the known position of the robotic manipulator at the machining station.

2. A method according to claim 1, wherein, in step (v), movements of the robotic manipulator, as well as the material removal tool, that will produce the required shape for the component are determined.

3. A method according to claim 2, which further includes:
measuring the position of the gripped component and/or the robotic manipulator at a site at or adjacent to the machining station one or more times during the machining operation of step (vi) to determine errors in the position of the robotic manipulator, and adjusting the determined movements of the material removal tool and/or the robotic manipulator to compensate for the errors in the remaining parts of the machining operation.

4. A method for controlling the machining of a component, the method incorporating closed-loop control based on feedback of measured parameters, wherein the method includes the steps of:
(i) measuring predetermined dimensions of a component;
(ii) comparing the measured dimensions against design data defining a required shape for the component;
(iii) using the results of the comparison to define material removal that is needed to bring the component to the required shape;
(iv) delivering the component to a machining station having a material removal tool (24), the component being gripped by a robotic manipulator (22) at the machining station;
(v) using the defined material removal and the known position of the robotic manipulator at the machining station to determine movements of the material removal tool and the robotic manipulator that will produce the required shape for the component; and
(vi) performing a machining operation on the component at the machining station using the determined movements while maintaining the grip on the component by the robotic manipulator;
wherein the method further includes:
measuring the position of the gripped component and/or the robotic manipulator at a site at or adjacent to the machining station one or more times during the machining operation of step (vi) to determine errors in the position of the robotic manipulator; and
adjusting the determined movements of the material removal tool and/or the robotic manipulator to compensate for the determined errors in the remaining parts of the machining operation.

5. A method according to any one of the previous claims, wherein the position of the gripped component and/or the robotic manipulator at said site is measured by probing the surface of the component at spaced locations.

6. A method according to claim 5, wherein sufficient spaced locations are probed to determine errors from all the active movement axes of the robotic manipulator.
